# EUROPEAN PATENT SPECIFICATION

(11) **EP 3 480 716 B1**
(45) Date of publication and mention of the grant of the patent: **30.12.2020**
(21) Application number: 17823524.8
(22) Date of filing: 22.06.2017
(51) Int. Cl.: G06F 1/16, G06K 9/00, H04M 1/02, H04M 1/67, G06F 21/32, G06F 21/84

(54) **ELECTRONIC APPARATUS CONTROL METHOD AND ELECTRONIC APPARATUS**
VERFAHREN ZUR STEUERUNG EINER ELEKTRONISCHEN VORRICHTUNG UND ELEKTRONISCHE VORRICHTUNG
PROCÉDÉ DE COMMANDE D'APPAREIL ÉLECTRONIQUE ET APPAREIL ÉLECTRONIQUE

(30) Priority: 08.07.2016 CN 201610539092
(43) Date of publication of application: 08.05.2019
(73) Proprietor: GUANGDONG OPPO MOBILE TELECOMMUNICATIONS CORP., LTD., Wusha, Chang'an Dongguan, Guangdong 523860 (CN)
(72) Inventor: LIN, Yugui, Dongguan Guangdong 523860 (CN)
(74) Representative: Manitz Finsterwald Patent- und Rechtsanwaltspartnerschaft mbB
(86) International application number: PCT/CN2017/089625
(87) International publication number: WO 2018/006712

(56) References cited:
- EP-A1- 2 981 050
- EP-A2- 2 530 941
- CN-A- 105 302 238
- CN-A- 105 426 722
- CN-A- 105 677 203
- CN-A- 105 678 142
- CN-A- 106 203 045
- US-A1- 2013 324 089

## Description

### FIELD

The present disclosure relates to the field of electronic device technologies, and more particularly to a method and an apparatus for controlling a flexible screen of an electronic device and an electronic device.

### BACKGROUND

With the rapid development of information technologies, electronic devices (such as mobile phones and tablet computers) are upgraded faster and faster, and a development trend of display screens of the electronic devices is adopting flexible screens as the displaying screens. The flexible screen is also referred to as a flexible display screen, which has features of light weight, bendability, and portability, and thus has become a future development direction of the display screen.

EP2981050A1 relates to a portable electronic device. The portable electronic device includes a flexible display unit including a first part, a second part rotatable based on a first boundary portion of the first part and configured to cover and not cover the first part and a third part rotatable based on a second boundary portion of the first part and configured to cover and not cover the first part. In addition, the portable electronic device includes a controller configured to display information on the flexible display unit based on the second and third parts covering or not covering the first part.

US2013/324089A1 relates to a portable terminal providing a fingerprint-based shortcut key to realize both security and one touch convenience. The portable terminal includes a fingerprint sensor for recognizing user's fingerprint, a memory for storing fingerprint data and a controller for mapping and storing first fingerprint data inputted through the fingerprint sensor and a function of the portable terminal in the memory. Upon input of second fingerprint data through the fingerprint sensor, there is a comparison of the first fingerprint data with the second fingerprint data, and performing the function mapped to the first fingerprint data when the first fingerprint data is identical to the second fingerprint data.

### SUMMARY

The present application relates to a method for controlling a flexible screen of an electronic device according to independent claim 1 and an electronic device according to independent claim 7. Further aspects of the present application are defined by the dependent claims.

Embodiments of the present disclosure have following beneficial effects.

It can be seen that, in embodiments of the present disclosure, the fingerprint data is obtained when the fingerprint sensor is pressed, the fingerprint data is matched with the preset fingerprint data, and the unfolding operation is performed on the flexible screen when the fingerprint data matches the preset fingerprint data successfully. Thus, the electronic device with the flexible screen can be provided with the fingerprint sensor, and the flexible screen may be unfolded only when the obtained fingerprint data matches the preset fingerprint data successfully, thus improving security of the electronic device.

### BRIEF DESCRIPTION OF THE DRAWINGS

Fig. 1 is a schematic diagram of an electronic device according to embodiments of the present disclosure.
Fig. 2 is a schematic diagram of components of the electronic device in Fig. la according to embodiments of the present disclosure.
Fig. 3 is a flow chart of a method for controlling a flexible screen of an electronic device according to a first embodiment of the present disclosure.
Fig. 4 is a flow chart of a method for controlling a flexible screen of an electronic device according to a second embodiment of the present disclosure.
Fig. 5 is a flow chart of a method for controlling a flexible screen of an electronic device according to a third embodiment of the present disclosure.
Fig. 6 is a flow chart of a method for controlling a flexible screen of an electronic device according to a fourth embodiment of the present disclosure.
Fig. 7 is a block diagram of an apparatus for controlling a flexible screen of electronic device according to a first embodiment of the present disclosure.
Fig. 8 is a block diagram of an apparatus for controlling a flexible screen of an electronic device according to a second embodiment of the present disclosure.
Fig. 9 is a block diagram of an apparatus for controlling a flexible screen of an electronic device according to a third embodiment of the present disclosure.
Fig. 10 is a block diagram of an electronic device according to embodiments of the present disclosure.

### EMBODIMENTS OF THE PRESENT DISCLOSURE

At present, a flexible screen (including a touch screen and a display screen) has been provided for an electronic device. However, since the electronic device with the flexible screen has a small size, it is difficult to find the electronic device if the electronic device is lost. Then, once the electronic device is lost, it is easy to cause leakage of user information. Therefore, how to improve security of the electronic device needs to be solved. The present disclosure provides a method and an apparatus for controlling a flexible screen of an electronic device and an electronic device, which can improve the security of the electronic device.

The electronic device provided by embodiments of the present disclosure may include a winding tube, a flexible screen, a fingerprint sensor, a motor, and a control circuit. The flexible screen is operable to wind around the winding tube. The fingerprint sensor is configured to obtain fingerprint data when the fingerprint sensor is pressed. The motor is coupled to the winding tube. The control circuit is coupled to the fingerprint sensor and the motor respectively, and configured to receive the fingerprint data, to match the fingerprint data with preset fingerprint data, and to drive the motor to rotate to unfold the flexible screen when the fingerprint data matches the preset fingerprint data.

The control circuit may be further configured to determine a matching value between the fingerprint data and the preset fingerprint data, and drive the motor to rotate based on the matching value.

The control circuit may be configured to: fully unfold the flexible screen when the matching value is greater than a preset threshold and greater than a fingerprint unlock threshold; and drive the motor to rotate based on an unfolding factor corresponding to the matching value when the matching value is less than or equal to the preset threshold and greater than the fingerprint unlock threshold, wherein the unfolding factor = (matching value - fingerprint unlock threshold) / (preset threshold - fingerprint unlock threshold).

The control circuit may be further configured to prompt a user to press the fingerprint sensor again when the fingerprint data fails to match the preset fingerprint data.

The electronic device described in embodiments of the present disclosure may include a smartphone (such as Android Phone, iOS Phone, and Windows Phone), a tablet computer, a PDA (personal digital assistant), a notebook computer, a MID (mobile internet device), or a wearable device. The above electronic devices are exemplary, and are not exhaustive. The electronic devices are not limited to these. It should be noted that, each of the above electronic devices is provided with the flexible screen and a fingerprint sensor.

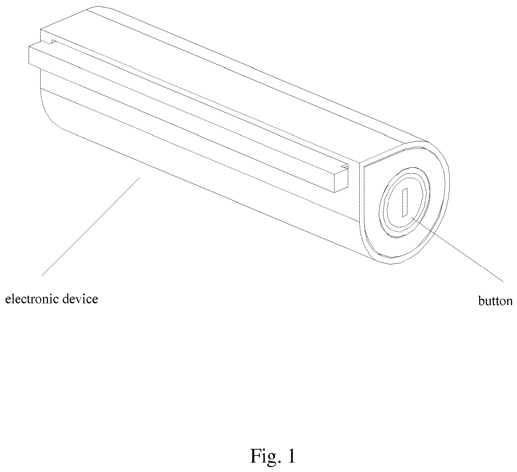

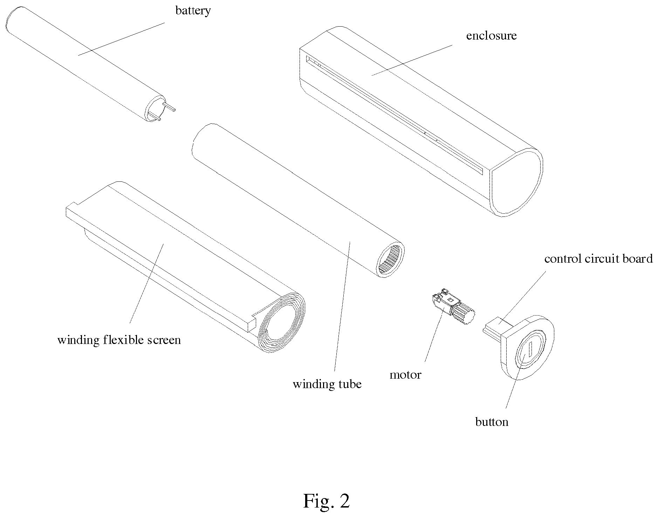

It should be noted that, as illustrated in Fig. 1, which shows an electronic device, the electronic device includes a button. In embodiments of the present disclosure, the button is integrated with a fingerprint sensor. The specific structure of the electronic device is as illustrated in Fig. 2, which includes a winding flexible screen, a winding tube (hollow), a battery, a motor, an enclosure, a control circuit board, and a button. The winding flexible screen is winded around the winding tube. The battery may be inserted into the winding tube from one end. The motor, the control circuit board and the button may be installed from the other end. The control circuit board is configured to control the motor to rotate. The button is configured to activate the control circuit board. When a user presses the button, the control circuit board may be used to drive the motor to rotate, drive the winding tube to rotate, and thus fold the flexible screen. The button may be a physical button or a touch button, or a sensor, which in embodiments of the present disclosure may be, a fingerprint sensor, or a fingerprint sensor integrated with a pressure sensor.

In embodiments of the present disclosure, the flexible screen may be fully unfolded or partially unfolded. When the flexible screen is fully unfolded, the full flexible screen may be used for display. When the flexible screen is partially unfolded, a part of the flexible screen may be used for display. When a part of the flexible screen is used for display, it is possible to provide more choices for the user to some extent, and it is interesting, and moreover, it has a certain security, since it is uneasy for others to steal information from the small screen.

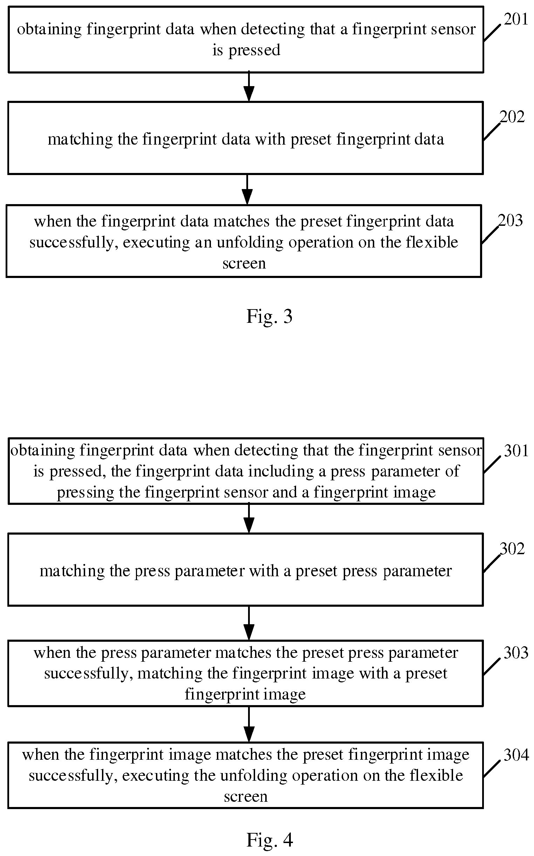

Based on the above electronic device, as illustrated in Fig. 3, the method for controlling the flexible screen of the electronic device described in this embodiment includes following operations.

At block 201, fingerprint data is obtained when the fingerprint sensor is pressed.

The electronic device described in embodiments of the present disclosure may be provided with the fingerprint sensor. The fingerprint sensor may be provided at any position of the electronic device, for example, integrated in the button as illustrated in Fig. 1.

In some embodiments, when the user presses the fingerprint sensor, a corresponding press parameter (for example, a press duration, a number of presses, and the like) may be obtained, and a fingerprint image may also be obtained. Therefore, the fingerprint data may include the fingerprint image and/or the press parameter.

In some embodiments, the press parameter of pressing the fingerprint sensor may include, but is not limited to, at least one of the number of presses, the press intensity, the press duration, and a press area. The number of presses may be the number of presses of pressing the fingerprint sensor within a preset time period. The press intensity may be a maximum press intensity or a mean press intensity of pressing the motor drive switch during a process from the user contacting with the fingerprint sensor to leaving the fingerprint sensor, or a press intensity at a certain time point. For example, if the time point is 0.01s, and the duration of the user pressing the fingerprint sensor is 2s, then the press intensity corresponding to this press process is the press intensity of pressing the fingerprint sensor at 0.01s. The press duration may be an entire time period from the user contacting with the fingerprint sensor to leaving the fingerprint sensor, or, the press duration may be a time period corresponding to the press intensity in a certain range in a process from the user contacting with the fingerprint sensor to leaving the fingerprint sensor (an intensity change curve during the press process may be obtained, and then the time period in which the press intensity is in the certain range may be counted based on the intensity change curve). The press area may be a maximum press area, a mean press area, or a minimum press area of pressing the fingerprint sensor during a process from the user contacting with the fingerprint sensor to leaving the fingerprint sensor, or a press area at a certain time point. For example, if the time point is 0.01s, and the press duration of pressing the fingerprint sensor is 2s, then the press area corresponding to the press process is the press area of pressing the fingerprint sensor at 0.01s.

Further, when the fingerprint sensor is a touch switch, the press parameter may be number of touch points of touching the fingerprint sensor. For example, when the fingerprint sensor is pressed with one finger, the number of touch points is 1; when the fingerprint sensor is pressed with two fingers, the number of touch points is 2; when the fingerprint sensor is pressed with three fingers, the number of touch points is 3, and so on.

At block 202, the fingerprint data is matched with preset fingerprint data.

In some embodiments, the preset fingerprint data may be stored in advance, i.e., the preset fingerprint data may be input in advance before executing embodiments of the present disclosure. The preset fingerprint data may include the press parameter and/or the fingerprint image detected when the user presses the fingerprint sensor.

In some embodiments, when the preset fingerprint data is a preset fingerprint image, the fingerprint image may be obtained, and the fingerprint image is matched with the preset fingerprint image. In detail, feature points of the fingerprint image and feature points of the preset fingerprint image may be extracted, and then the feature points of the fingerprint image may be matched with the feature points of the preset fingerprint image. When the matching succeeds, the operation at block 203 may be executed. The feature points may be extracted by means of a Harris corner extraction algorithm, or a SIFT (Scale Invariant Feature Transform) algorithm.

In some embodiments, the preset fingerprint data includes the preset press parameter and the preset fingerprint image. The press parameter and the fingerprint image may be obtained when the user presses the fingerprint sensor, and the press parameter may be matched with the preset press parameter, and the fingerprint image may be matched with the preset fingerprint image. In some embodiments, two processes or threads may be used to match the fingerprint data with the preset fingerprint data, one process or thread being used to match the press parameter with the preset press parameter, the other process or thread being used to match the fingerprint image with the preset fingerprint image, and the two processes or threads being executed in parallel.

At block 203, when the fingerprint data matches the preset fingerprint data successfully, unfolding operation is executed on the flexible screen.

In some embodiments, the flexible screen may be unfolded in following two ways.

In the first way, the electronic device is unlocked by fingerprint, and then the user may manually unfold the flexible screen. In this way, if the fingerprint data fails to match the preset fingerprint data, it is unable to execute the unfolding operation on the flexible screen.

In the second way, the electronic device is unlocked, and afterwards, the electronic device performs the unfolding operation of the flexible screen.

Certainly, before the operation at block 201, an application bound with the preset fingerprint data may be set. After the folding operation of the flexible screen is executed, a specified page of the application bound with the preset fingerprint data may be directly displayed on the display screen, in which the specified page may be a home page of the application, or any other page.

In some embodiments, when the fingerprint data fails to match with the preset fingerprint data, the user is prompted to press the fingerprint sensor again. The electronic device may be provided with a flash lamp. When the fingerprint data fails to match the preset fingerprint data, the flash lamp may flash many times. In some embodiments, the electronic device may be provided with a buzzer. When the fingerprint data fails to match the preset fingerprint data, the buzzer may make a sound. Certainly, there are many other ways for prompting the user, which will not be elaborated here.

It can be seen that, in embodiments of the present disclosure, the fingerprint data is obtained when the fingerprint sensor is pressed, the fingerprint data is matched with the preset fingerprint data, and the unfolding operation is executed on the flexible screen when the fingerprint data matches the preset fingerprint data successfully. Thus, the electronic device with the flexible screen can be provided with the fingerprint sensor, and the flexible screen may be unfolded only when the obtained fingerprint data matches the preset fingerprint data successfully, thus improving security of the electronic device.

Fig. 4 is a flow chart of a method for controlling a flexible screen of an electronic device according to a second embodiment of the present disclosure. As illustrated in Fig. 4, the method described in this embodiment includes following operations.

At block 301, the fingerprint data is obtained when the fingerprint sensor is pressed, in which the fingerprint data includes the press parameter of pressing the fingerprint sensor and the fingerprint image.

At block 302, the press parameter is matched with the preset press parameter.

At block 303, when the press parameter matches the preset press parameter successfully, the fingerprint image is matched with the preset fingerprint image.

At block 304, when the fingerprint image matches the preset fingerprint image successfully, the unfolding operation is executed on the flexible screen.

At first, the press parameter may be matched with the preset press parameter at block 302. For example, when the press parameter is the press intensity, it may be determined whether the press intensity matches a preset press intensity. For example, when the preset press intensity is 30-35N, and the press intensity is 32N, the matching is successful. For another example, when the press parameter includes the press duration and the press intensity, it may be determined whether the press duration matches a preset press duration and whether the press intensity matches a preset press intensity. When the press parameter matches the preset press parameter successfully, the fingerprint image may be matched with the preset fingerprint image. Since the matching of the fingerprint data is divided into two steps, in the first step, the press parameter being matched with the preset press parameter, and in the second step, the fingerprint image being matched with the preset fingerprint image when the matching in the first step is successful. Therefore, the security of the electronic device may be improved.

In regard to specific description of other operations in Fig. 4, reference may be made to specific description of respective operations in the embodiment illustrated in Fig. 3, which will not be elaborated here.

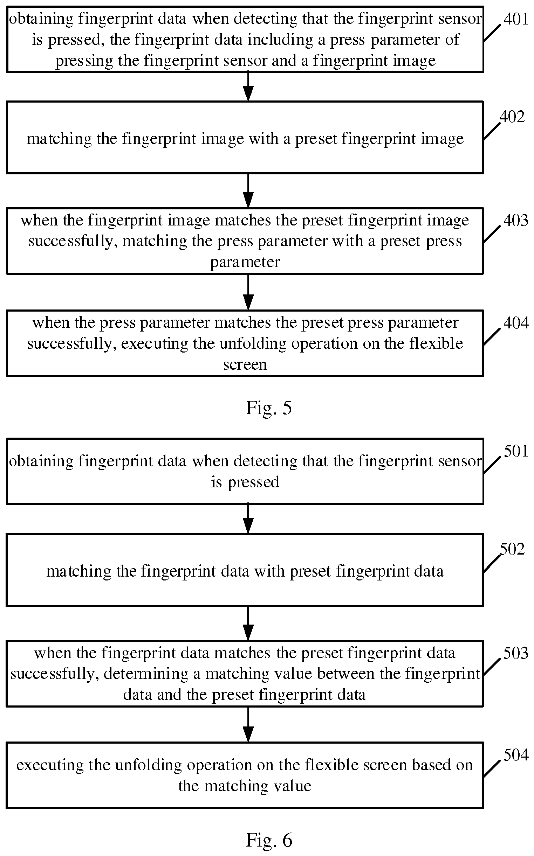

Fig. 5 is a flow chart of a method for controlling a flexible screen of an electronic device according to a third embodiment of the present disclosure. As illustrated in Fig. 5, the method described in this embodiment includes following operations.

At block 401, the fingerprint data is obtained when the fingerprint sensor is pressed, in which the fingerprint data includes the press parameter of pressing the fingerprint sensor and the fingerprint image.

At block 402, the fingerprint image is matched with the preset fingerprint image.

At block 403, when the fingerprint image matches the preset fingerprint image successfully, the press parameter is matched with the preset press parameter.

At block 404, when the press parameter matches the preset press parameter successfully, the unfolding operation is executed on the flexible screen.

At first, the fingerprint image may be matched with the preset fingerprint image at block 402. When the matching is successful, the press parameter is then matched with the preset press parameter. For example, when the press parameter is the press intensity, it may be determined whether the press intensity matches a preset press intensity. For example, when the preset press intensity is 30-35N, and the press intensity is 32N, the matching is successful. For another example, when the press parameter includes the press duration and the press intensity, it may be determined whether the press duration matches a preset press duration and whether the press intensity matches a preset press intensity. Since the matching of the fingerprint data is divided into two steps, in the first step, the fingerprint image being matched with the preset fingerprint image, and in the second step, the press parameter being matched with the preset press parameter when the matching in the first step is successful, the security of the electronic device may be improved. In actual implementation, the fingerprint image may be copied, and thus the security of the electronic device is reduced. However, in this embodiment, when the fingerprint image matches the preset fingerprint image successfully, it also needs to match the press parameter with the preset press parameter, and thus the security of the electronic device is further improved.

In regard to specific description of other operations in Fig. 5, reference may be made to specific description of respective operations in the embodiment illustrated in Fig. 3, which will not be elaborated here.

Fig. 6 is a flow chart of a method for controlling a flexible screen of an electronic device according to a fourth embodiment of the present disclosure. As illustrated in Fig. 6, the method described in this embodiment includes following operations.

At block 501, the fingerprint data is obtained when it is detected that the fingerprint sensor is pressed.

At block 502, the fingerprint data is matched with the preset fingerprint data.

At block 503, when the fingerprint data matches the preset fingerprint data successfully, a matching value between the fingerprint data and the preset fingerprint data is determined.

At block 504, the unfolding operation is executed on the flexible screen based on the matching value.

When the fingerprint data is matched with the preset fingerprint data at block 503, the matching value between the two can be directly obtained, which will not be elaborated here.

In some embodiments, the operation at block 504 may include followings.
41) When the matching value is greater than a preset threshold, the flexible screen is fully unfolded, in which the matching value is greater than a fingerprint unlock threshold.
42) When the matching value is less than or equal to the preset threshold and greater than the fingerprint unlock threshold, an unfolding factor of the flexible screen corresponding to the matching value is determined based on a formula of unfolding factor = (matching value - fingerprint unlock threshold) / (preset threshold - fingerprint unlock threshold), and the unfolding operation is executed on the flexible screen based on the unfolding factor.

At 41), the fingerprint unlock threshold is a preset matching threshold between the fingerprint data and the preset fingerprint data. When the matching value between the fingerprint data input by the user and the preset fingerprint data is greater than the fingerprint unlock threshold, the electronic device may be unlocked by fingerprint, and otherwise, the electronic device cannot be unlocked by fingerprint. Certainly, the preset threshold may also be set, in which the preset threshold is greater than the fingerprint unlock threshold. When the matching value is greater than the preset threshold, the flexible screen may be fully unfolded. When the matching value is between the preset threshold and the fingerprint unlock threshold, the unfolding factor of the flexible screen can be determined based on the above formula. The closer to the preset threshold the matching value is, the greater the unfolding factor is, and the more far away from the preset threshold the matching value is, the smaller the unfolding factor is. For example, assume that the fingerprint unlock threshold is 0.8, and the preset threshold is 0.9. If the matching value is 0.85, the unfolding factor is 0.5, and when the unfolding operation is executed on the flexible screen based on the unfolding factor, the flexible screen is merely unfolded to a size half of that when the flexible screen is fully unfolded. If the matching value is 0.81, the unfolding factor is 0.1, and the flexible screen is merely unfolded a little bit. In some embodiments, when the flexible screen is not fully unfolded, the flexible screen can be stretched manually, to further unfold the flexible screen.

In regard to specific description of other operations in Fig. 6, reference may be made to specific description of respective operations in the embodiment illustrated in Fig. 3, which will not be elaborated here.

Embodiments of the present disclosure also provide an electronic device.

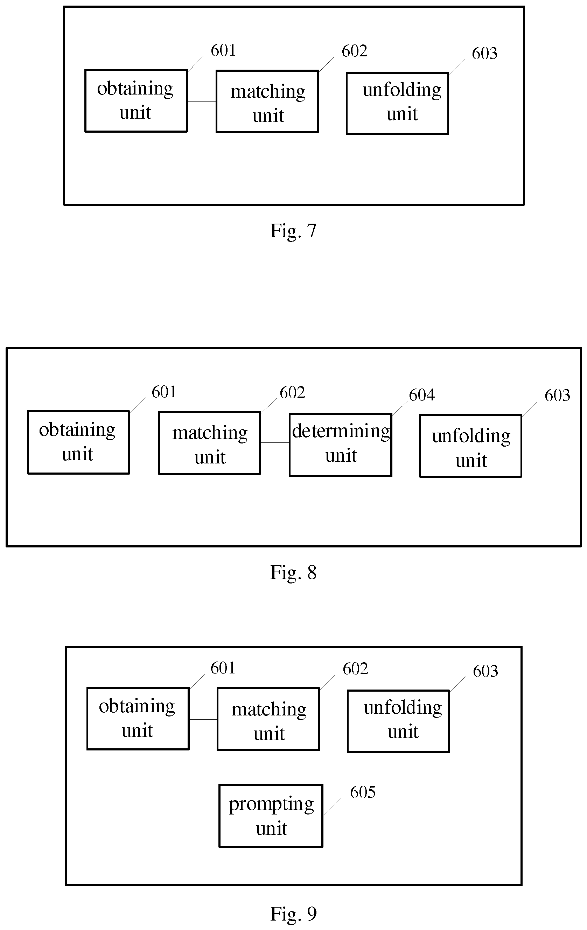

Please refer to Fig. 7, which is a block diagram of an electronic device according to a first embodiment of the present disclosure. The electronic device described in this embodiment is provided with a flexible screen and fingerprint sensor and includes an obtaining unit 601, a matching unit 602 and an unfolding unit 603..

The obtaining unit 601 is configured to obtain fingerprint data when the fingerprint sensor is pressed.

The matching unit 602 is configured to match the fingerprint data obtained by the obtaining unit 601 with preset fingerprint data.

The unfolding unit 603 is configured to execute an unfolding operation on the flexible screen when a matching result of the matching unit 602 is that the fingerprint data matches the preset fingerprint data successfully.

In at least one embodiment, the obtaining unit 601 is configured to obtain a fingerprint image and a press parameter of pressing the fingerprint sensor.

In some embodiments, the matching unit 602 is configured to: match the press parameter with a preset press parameter; and match the fingerprint image with a preset fingerprint image when the press parameter matches the preset press parameter successfully.

In other embodiments, the matching unit 602 is configured to: match the fingerprint image with a preset fingerprint image; and match the press parameter with a preset press parameter when the fingerprint image matches the preset fingerprint image successfully.

In some embodiments, as illustrated in Fig. 8, the electronic device illustrated in Fig. 7 may further include a determining unit 604.

The determining unit 604 is configured to determine a matching value between the fingerprint data and the preset fingerprint data before the unfolding unit 603 executes the unfolding operation on the flexible screen.

The unfolding unit 603 is configured to execute the unfolding operation on the flexible screen based on the matching value.

Further, the unfolding unit 603 is configured to: fully unfold the flexible screen when the matching value is greater than a preset threshold and greater than a fingerprint unlock threshold; and unfold the flexible screen based on an unfolding factor corresponding to the matching value when the matching value is less than or equal to the preset threshold and greater than the fingerprint unlock threshold, wherein the unfolding factor = (matching value - fingerprint unlock threshold) / (preset threshold - fingerprint unlock threshold).

In some embodiments, as illustrated in Fig. 9, the electronic device illustrated in Fig. 7 may further include a prompting unit 605.

The prompting unit 605 is configured to prompt a user to press the fingerprint sensor again when a matching result of the matching unit 602 is that the fingerprint data fails to match the preset fingerprint data.

It can be seen that, the electronic device described in embodiments of the present disclosure may obtain the fingerprint data when the fingerprint sensor is pressed, match the fingerprint data with the preset fingerprint data, and execute the unfolding operation on the flexible screen when the fingerprint data matches the preset fingerprint data successfully. Therefore, the electronic device with the flexible screen can be provided with the fingerprint sensor, and the flexible screen may be unfolded only when the obtained fingerprint data matches the preset fingerprint data successfully, thus improving security of the electronic device.

It can be understood that, functions of respective program modules of the electronic device in this embodiment may be executed according to above method embodiments, with respect to the specific implementation of which, reference can be made to related description of the above method embodiments, which will not be elaborated here.

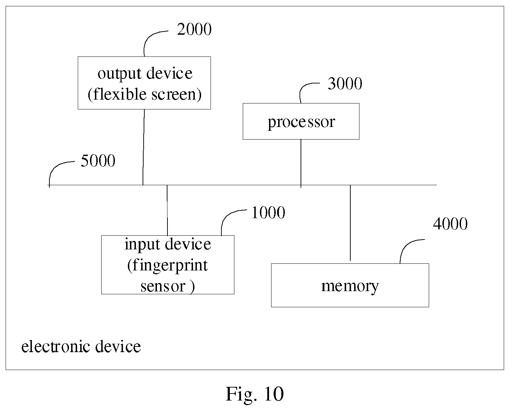

Please refer to Fig. 10, which is a block diagram of an electronic device according to embodiments of the present disclosure. The electronic device described in this embodiment includes: at least one input device 1000; at least one output device 2000; at least one processor 3000, for example, CPU; and a memory 4000. The above input device 1000, output device 2000, processor 3000 and memory 4000 are coupled via a bus 5000.

The input device 1000 may be a touch panel, a physical button, or a mouse, a fingerprint sensor, or the like.

The output device 2000 may be a flexible screen.

The memory 4000 may be a high speed RAM, or may be a non-volatile memory, for example, a disk memory. The memory 4000 is configured to store a set of program codes. The input device 1000, the output device 2000 and the processor 3000 are configured to call the program codes stored in the memory 4000, to execute following operations.

The processor 3000 is configured to: obtain fingerprint data when detecting that the fingerprint sensor is pressed; match the fingerprint data with preset fingerprint data; and when the fingerprint data matches the preset fingerprint data successfully, execute unfolding operation on the flexible screen.

In at least one embodiment, the processor 3000 is configured to obtain the fingerprint data by: obtaining a fingerprint image and a press parameter of pressing the fingerprint sensor.

In at least one embodiment, the processor 3000 is configured to match the fingerprint data with the preset fingerprint data, by: matching the press parameter with a preset press parameter; and matching the fingerprint image with a preset fingerprint image when the press parameter matches the preset press parameter successfully.

In at least one embodiment, the processor 3000 is configured to match the fingerprint data with the preset fingerprint data, by: matching the fingerprint image with a preset fingerprint image; and matching the press parameter with a preset press parameter when the fingerprint image matches the preset fingerprint image successfully.

In at least one embodiment, before executing the unfolding operation on the flexible screen, the processor 3000 is further configured to: determining a matching value between the fingerprint data and the preset fingerprint data; and executing the unfolding operation on the flexible screen based on the matching value.

In at least one embodiment, the processor 3000 is configured to execute the unfolding operation on the flexible screen, by: fully unfolding the flexible screen when the matching value is greater than a preset threshold and greater than a fingerprint unlock threshold; unfolding the flexible screen based on an unfolding factor corresponding to the matching value when the matching value is less than or equal to the preset threshold and greater than the fingerprint unlock threshold, wherein the unfolding factor = (matching value - fingerprint unlock threshold) / (preset threshold - fingerprint unlock threshold).

In at least one embodiment, the processor 3000 is further configured to: prompt a user to press the fingerprint sensor again when the fingerprint data fails to match the preset fingerprint data.

Embodiments of the present disclosure further provide a computer storage medium. The computer storage medium is stored with computer programs for electronic data exchange. The computer programs are configured to cause a computer to execute all or a part of operations of any control method of an electronic device disclosed in above method embodiments.

Embodiments of the present disclosure further provide a computer program product. The computer program product includes a non-transitory computer readable storage medium stored with computer programs. The computer programs are operable to cause a computer to execute all or a part of operations of any control method of an electronic device disclosed in above method embodiments.

Although the present disclosure is described here in combination with respective embodiments, those skilled in the art may understand and implement other variants of the disclosed embodiments by viewing the drawings, the disclosure, and the appending claims during implementing the claimed inventions. In the claims, the term "comprising" does not exclude other components or steps, "a" or "an" does not exclude a plural form. A single processor or other units may implement several functions listed in the claims. Some measures are disclosed in mutually different dependent claims, but this does not imply that these measures cannot be combined to produce a better effect.

Those skilled in the art should understand that, embodiments of the present disclosure may be provided as a method, an apparatus (device) or a computer program product. Thus, the present disclosure may be implemented in a form of hardware, software, or a combination of hardware and software. Moreover, the preset disclosure may be implemented in a form of computer program product implemented on one or more computer accessible storage medium (including, but not limited to, disk memory, CD-ROM, and optical memory) and containing computer accessible program codes. The computer program is stored/distributed in a suitable medium, which is provided together with other hardware or acts as a part of the hardware. The computer program may also be distributed in other forms, for example, via the Internet or other wired or wireless telecommunication systems.

The present disclosure is described with reference to flow charts and/or block diagrams of a method, apparatus (device) and computer program product of embodiments of the present disclosure. It should be understood that, each flow and/or block in the flow charts and/or block diagrams, and a combination of flows and/or blocks in the flow charts and/or block diagrams may be implemented by computer program instructions. These computer program instructions may be provided to a general-purpose computer, a dedicated computer, an embedded processor, or a processor of other programmable data processing device to produce a machine, such that the instructions executed by the computer or the processor of other programmable data processing device generate an apparatus for implementing functions specified in one or more flows of the flow chart and/or one or more blocks in the block diagram.

These computer program instructions may also be stored in a computer readable memory that can guide the computer or the other programmable data processing devices to work in a special way, such that the instructions stored in the computer readable memory generate a manufactured article including a command device. The command device implements functions specified in one or more flows of the flow chart and/or one or more blocks in the block diagram.

These computer program instructions may also be loaded to the computer or the other programmable data processing devices, such that a series of operations is executed on the computer or the other programmable data processing devices to generate processing implemented by the computer, and thus the instructions executed on the computer or the other programmable data processing devices provide operations for implementing functions specified in one or more flows of the flow chart and/or one or more blocks in the block diagram.

Although the present disclosure is described in combination with specific feature and embodiments thereof, it is obvious that various modification and combination can be made without departing form the spirit and the scope of the present disclosure. Accordingly, the specification and the drawings are merely exemplary illustration of the present disclosure defined by the appending claims, and are regarded to cover any and all modification, change, combination or equivalent in the scope of the present disclosure. Obviously, those skilled in the art may make various change and variants to the present disclosure, without departing from the spirit and the scope of the present disclosure. In this case, when these change and variants of the present disclosure belong to the scope of the claims and the equivalent technologies, the present disclosure intends to include these change and variants.

## Claims

1. A method for controlling a flexible screen of an electronic device provided with a flexible screen and a fingerprint sensor, the electronic device comprising a control circuit, and the method comprising:
obtaining, by the fingerprint sensor, fingerprint data when the fingerprint sensor is pressed (201; 301; 401; 501);
matching, by the electronic device, the fingerprint data with preset fingerprint data (202; 502); and
being **characterized in that**, the method further comprises:
determining, by the electronic device, a matching value between the fingerprint data and the preset finger data; and
fully unfolding the flexible screen by the electronic device under control of the control circuit, in response to detecting that the matching value is greater than a preset threshold and greater than a fingerprint unlock threshold.

2. The method of claim 1, wherein the fingerprint data comprises a fingerprint image and a press parameter, the preset fingerprint data comprises a preset fingerprint image and a preset press parameter.

3. The method of claim 1, further comprising: partially unfolding, under the control of the control circuit, the flexible screen based on an unfolding factor corresponding to the matching value, in response to detecting that the matching value is less than or equal to the preset threshold and greater than the fingerprint unlock threshold, wherein the unfolding factor = (matching value - fingerprint unlock threshold) / (preset threshold - fingerprint unlock threshold).

4. The method of any of claims 1-3, further comprising:
prompting a user to press the fingerprint sensor again when the fingerprint data fails to match the preset fingerprint data.

5. The method of any of claims 1-4, further comprising:
displaying a preset page of an application bound to the preset fingerprint sensor directly after a folding operation of the flexible screen is executed.

6. The method of any of claims 1-5, wherein the press parameter comprises at least one of a number of presses of pressing the fingerprint sensor, a press intensity of pressing the fingerprint sensor, and a press duration of pressing the fingerprint sensor.

7. An electronic device provided with a flexible screen and a fingerprint sensor, comprising:
an obtaining unit (601), configured to obtain fingerprint data when the fingerprint sensor is pressed;
a matching unit (602), configured to match the fingerprint data with preset fingerprint data;
a determining unit (604), configured to determine a matching value between the fingerprint data and the preset fingerprint data in response to detecting that the fingerprint data matches the preset fingerprint data;
being **characterized in that**, the electronic device further comprises:
an unfolding unit (603), configured to fully unfold the flexible screen, in response to detecting that the matching value is greater than a preset threshold and greater than a fingerprint unlock threshold.

8. The electronic device of claim 7, wherein the fingerprint data comprises a fingerprint image and a press parameter, and the preset fingerprint data comprises a preset fingerprint image and a preset press parameter.

9. The electronic device of claim 7, wherein the unfolding unit (603) is further configured to:
partially unfold the flexible screen based on an unfolding factor corresponding to the matching value, in response to detecting that the matching value is less than or equal to the preset threshold and greater than the fingerprint unlock threshold, wherein the unfolding factor = (matching value - fingerprint unlock threshold) / (preset threshold - fingerprint unlock threshold).

10. The electronic device of any of claims 7-9, further comprising:
a prompting unit (605), configured to prompt a user to press the fingerprint sensor again when the fingerprint data fails to match the preset fingerprint data.

11. The electronic device of any of claims 7-10, wherein the press parameter comprises at least one of a number of presses of pressing the fingerprint sensor, a press intensity of pressing the fingerprint sensor, and a press duration of pressing the fingerprint sensor.

12. An electronic device, comprising a flexible screen (2000), a fingerprint sensor (1000), a processor and a memory having one or more programs stored thereon,
wherein when the one or more programs are executed by the processor, the processor is configured to execute the method of any one of claims 1 to 6.

13. A computer storage medium, stored with computer programs that, when running on a processor, cause the processor to execute the method of any of claims 1-6.

## Patentansprüche

1. Verfahren zum Steuern eines flexiblen Bildschirms einer elektronischen Vorrichtung, die mit einem flexiblen Bildschirm und einem Fingerabdrucksensor versehen ist, wobei die elektronische Vorrichtung eine Steuerungsschaltung umfasst und wobei das Verfahren Folgendes umfasst:
Erhalten, durch den Fingerabdrucksensor, von Fingerabdruckdaten, wenn der Fingerabdrucksensor gedrückt wird (201; 301; 401; 501);
Abgleichen, durch die elektronische Vorrichtung, der Fingerabdruckdaten mit voreingestellten Fingerabdruckdaten (202; 502); und
**dadurch gekennzeichnet, dass** das Verfahren ferner Folgendes umfasst:
Bestimmen, durch die elektronische Vorrichtung, eines Abgleichwerts zwischen den Fingerabdruckdaten und den voreingestellten Fingerabdruckdaten; und
vollständiges Entfalten des flexiblen Bildschirms durch die elektronische Vorrichtung unter der Steuerung der Steuerungsschaltung als Reaktion auf Detektieren, dass der Abgleichwert größer als eine voreingestellte Schwelle und größer als eine Fingerabdruckentriegelungsschwelle ist.

2. Verfahren nach Anspruch 1, wobei die Fingerabdruckdaten ein Fingerabdruckbild und einen Drückparameter umfassen, wobei die voreingestellten Fingerabdruckdaten ein voreingestelltes Fingerabdruckbild und einen voreingestellten Drückparameter umfassen.

3. Verfahren nach Anspruch 1, das ferner Folgendes umfasst: teilweises Entfalten, unter der Steuerung der Steuerungsschaltung, des flexiblen Bildschirms auf der Grundlage eines dem Abgleichwert entsprechenden Entfaltungsfaktors als Reaktion auf Detektieren, dass der Abgleichwert kleiner oder gleich der voreingestellten Schwelle und größer als die Fingerabdruckentriegelungsschwelle ist, wobei Folgendes gilt: Entfaltungsfaktor = (Abgleichwert-Fingerabdruckentriegelungsschwelle)/(voreingestellte Schwelle - Fingerabdruckentriegelungsschwelle).

4. Verfahren nach einem der Ansprüche 1-3, das ferner Folgendes umfasst:
Auffordern eines Benutzers zum nochmaligen Drücken des Fingerabdrucksensors, wenn Abgleichen der Fingerabdruckdaten mit den voreingestellten Fingerabdruckdaten fehlschlägt.

5. Verfahren nach einem der Ansprüche 1-4, das ferner Folgendes umfasst:
Anzeigen einer voreingestellten Seite einer an den voreingestellten Fingerabdrucksensor angebundenen Anwendung unmittelbar nachdem eine Faltoperation des flexiblen Bildschirms ausgeführt wurde.

6. Verfahren nach einem der Ansprüche 1-5, wobei der Drückparameter eine Drückanzahl des Drückens des Fingerabdrucksensors und/oder eine Drückintensität des Drückens des Fingerabdrucksensors und/oder eine Drückdauer des Drückens des Fingerabdrucksensors umfasst.

7. Elektronische Vorrichtung, versehen mit einem flexiblen Bildschirm und einem Fingerabdrucksensor, die Folgendes umfasst:
eine Erhalteeinheit (601), ausgelegt zum Erhalten von Fingerabdruckdaten, wenn der Fingerabdrucksensor gedrückt wird;
eine Abgleicheinheit (602), ausgelegt zum Abgleichen der Fingerabdruckdaten mit voreingestellten Fingerabdruckdaten;
eine Bestimmungseinheit (604), ausgelegt zum Bestimmen eines Abgleichwerts zwischen den Fingerabdruckdaten und den voreingestellten Fingerabdruckdaten als Reaktion auf Detektieren, dass die Fingerabdruckdaten mit den voreingestellten Fingerabdruckdaten übereinstimmen;
**dadurch gekennzeichnet, dass** die elektronische Vorrichtung ferner Folgendes umfasst:
eine Entfalteeinheit (603), ausgelegt zum vollständigen Entfalten des flexiblen Bildschirms als Reaktion auf Detektieren, dass der Abgleichwert größer als eine voreingestellte Schwelle und größer als eine Fingerabdruckentriegelungsschwelle ist.

8. Elektronische Vorrichtung nach Anspruch 7, wobei die Fingerabdruckdaten ein Fingerabdruckbild und einen Drückparameter umfassen und die voreingestellten Fingerabdruckdaten ein voreingestelltes Fingerabdruckbild und einen voreingestellten Drückparameter umfassen.

9. Elektronische Vorrichtung nach Anspruch 7, wobei die Entfalteeinheit (603) ferner ausgelegt ist zum: teilweisen Entfalten des flexiblen Bildschirms auf der Grundlage eines dem Abgleichwert entsprechenden Entfaltungsfaktors als Reaktion auf Detektieren, dass der Abgleichwert kleiner oder gleich der voreingestellten Schwelle und größer als die Fingerabdruckentriegelungsschwelle ist, wobei Folgendes gilt: Entfaltungsfaktor = (Abgleichwert-Fingerabdruckentriegelungsschwelle)/(voreingestellte Schwelle - Fingerabdruckentriegelungsschwelle).

10. Elektronische Vorrichtung nach einem der Ansprüche 7-9, die ferner Folgendes umfasst:
eine Aufforderungseinheit (605), ausgelegt zum Auffordern eines Benutzers zum nochmaligen Drücken des Fingerabdrucksensors, wenn Abgleichen der Fingerabdruckdaten mit den voreingestellten Fingerabdruckdaten fehlschlägt.

11. Elektronische Vorrichtung nach einem der Ansprüche 7-10, wobei der Drückparameter eine Drückanzahl des Drückens des Fingerabdrucksensors und/oder eine Drückintensität des Drückens des Fingerabdrucksensors und/oder eine Drückdauer des Drückens des Fingerabdrucksensors umfasst.

12. Elektronische Vorrichtung, umfassend einen flexiblen Bildschirm (2000), einen Fingerabdrucksensor (1000), einen Prozessor und einen Speicher, der ein oder mehrere darauf gespeicherte Programme aufweist, wobei, wenn das eine oder die mehreren Programme durch den Prozessor ausgeführt werden, der Prozessor konfiguriert wird zum Ausführen des Verfahrens nach einem der Ansprüche 1 bis 6.

13. Computerspeicherungsmedium, mit Computerprogrammen bespeichert, die, wenn sie auf einem Prozessor laufen, den Prozessor zum Ausführen des Verfahrens nach einem der Ansprüche 1-6 veranlassen.

## Revendications

1. Procédé de commande d'un écran souple d'un dispositif électronique muni d'un écran souple et d'un capteur d'empreinte digitale, le dispositif électronique comprenant un circuit de commande et le procédé comprenant :
l'obtention, par le capteur d'empreinte digitale, de données d'empreinte digitale lorsque l'on appuie sur le capteur d'empreinte digitale (201 ; 301 ; 401 ; 501) ;
la mise en correspondance, par le dispositif électronique, des données d'empreinte digitale avec des données d'empreinte digitale prédéfinies (202 ; 502) et
étant **caractérisé en ce que**, le procédé comprend en outre :
la détermination, par le dispositif électronique, d'une valeur de correspondance entre les données d'empreinte digitale et les données d'empreinte digitale prédéfinies ; et
le déploiement complet de l'écran souple par le dispositif électronique sous la commande du circuit de commande, en réponse à la détection d'une valeur de correspondance supérieure à un seuil prédéfini et supérieure à un seuil de déverrouillage par empreinte digitale.

2. Procédé selon la revendication 1, les données d'empreinte digitale comprenant une image d'empreinte digitale et un paramètre de pression, les données d'empreinte digitale prédéfinies comprenant une image d'empreinte digitale prédéfinie et un paramètre de pression prédéfini.

3. Procédé selon la revendication 1, comprenant en outre : le déploiement partiel, sous la commande du circuit de commande, de l'écran souple basé sur un facteur de déploiement correspondant à la valeur de correspondance, en réponse à la détection du fait que la valeur de correspondance est inférieure ou égale au seuil prédéfini et supérieure au seuil de déverrouillage par empreinte digitale, avec le facteur de déploiement = (valeur de correspondance - seuil de déverrouillage par empreinte digitale)/(seuil prédéfini - seuil de déverrouillage par empreinte digitale).

4. Procédé selon l'une quelconque des revendications 1 à 3, comprenant en outre :
l'invitation à un utilisateur d'appuyer à nouveau sur le capteur d'empreinte digitale lorsque les données d'empreinte digitale ne correspondent pas aux données d'empreinte digitale prédéfinies.

5. Procédé selon l'une quelconque des revendications 1 à 4, comprenant en outre :
l'affichage d'une page prédéfinie d'une application liée au capteur d'empreinte digitale prédéfini directement après l'exécution d'une opération de repliement de l'écran souple.

6. Procédé selon l'une quelconque des revendications 1 à 5, le paramètre de pression comprenant au moins un paramètre parmi un certain nombre de pressions de pression du capteur d'empreinte digitale, une intensité de pression du capteur d'empreinte digitale, et une durée de pression du capteur d'empreinte digitale.

7. Dispositif électronique muni d'un écran souple et d'un capteur d'empreinte digitale, comprenant :
une unité d'obtention (601), configurée pour obtenir des données d'empreinte digitale lorsque le capteur d'empreinte digitale est pressé ;
une unité de mise en correspondance (602), configurée pour mettre en correspondre les données d'empreinte digitale avec des données d'empreinte digitale prédéfinies ;
une unité de détermination (604), configurée pour déterminer une valeur de correspondance entre les données d'empreinte digitale et les données d'empreinte digitale prédéfinies en réponse à la détection d'une correspondance entre les données d'empreinte digitale et les données d'empreinte digitale prédéfinies ;
étant **caractérisé en ce que** le dispositif électronique comprend en outre :
une unité de déploiement (603), configurée pour déployer complètement l'écran souple, en réponse à la détection que la valeur de correspondance est supérieure à un seuil prédéfini et supérieure à un seuil de déverrouillage d'empreinte digitale.

8. Dispositif électronique selon la revendication 7, les données d'empreinte digitale comprenant une image d'empreinte digitale et un paramètre de pression, et les données d'empreinte digitale prédéfinies comprenant une image d'empreinte digitale prédéfinie et un paramètre de pression prédéfini.

9. Dispositif électronique selon la revendication 7, l'unité de déploiement (603) étant en outre configurée pour :
déployer partiellement l'écran souple sur la base d'un facteur de déploiement correspondant à la valeur de correspondance, en réponse à la détection du fait que la valeur de correspondance est inférieure ou égale au seuil prédéfini et supérieure au seuil de déverrouillage par empreinte digitale, avec le facteur de déploiement = (valeur de correspondance - seuil de déverrouillage par empreinte digitale)/(seuil prédéfini - seuil de déverrouillage par empreinte digitale).

10. Dispositif électronique selon l'une quelconque des revendications 7 à 9, comprenant en outre :
une unité d'invite (605), configurée pour inviter un utilisateur à appuyer à nouveau sur le capteur d'empreinte digitale lorsque les données d'empreinte digitale ne correspondent pas aux données d'empreinte digitale prédéfinies.

11. Dispositif électronique selon l'une quelconque des revendications 7 à 10, le paramètre de pression comprenant au moins un paramètre parmi un certain nombre de pressions sur le capteur d'empreinte digitale, une intensité de pression sur le capteur d'empreinte digitale et une durée de pression sur le capteur d'empreinte digitale.

12. Dispositif électronique, comprenant un écran souple (2000), un capteur d'empreinte digitale (1000), un processeur et une mémoire ayant un ou plusieurs programmes stockés sur celle-ci,
lorsque le ou les programmes sont exécutés par le processeur, le processeur étant configuré pour exécuter le procédé selon l'une quelconque des revendications 1 à 6.

13. Support de stockage informatique, sur lequel sont stockés des programmes informatiques qui, lorsqu'ils sont exécutés par un processeur, amènent le processeur à exécuter le procédé selon l'une quelconque des revendications 1 à 6.
